Europäisches Patentamt

European Patent Office

Office européen des brevets

(11) Publication number: 0 364 212
A1

# EUROPEAN PATENT APPLICATION

(21) Application number: 89310351.5

(22) Date of filing: 10.10.89

(51) Int. Cl.5: G11B 11/10 , G11B 11/12 , G11B 11/14 , G11B 11/18 , G11B 13/04

(30) Priority: 11.10.88 JP 256321/88

(43) Date of publication of application:
18.04.90 Bulletin 90/16

(84) Designated Contracting States:
DE FR GB IT NL

(71) Applicant: CANON KABUSHIKI KAISHA
30-2, 3-chome, Shimomaruko, Ohta-ku
Tokyo(JP)

(72) Inventor: Kobayashi, Tadashi Furunesu
Jiyugaoka No. 202
17-18, Jiyugaoka 2-chome
Meguro-ku Tokyo(JP)

(74) Representative: Beresford, Keith Denis Lewis
et al
BERESFORD & Co. 2-5 Warwick Court High
Holborn
London WC1R 5DJ(GB)

(54) Magneto-optical recording medium having a reading-out layer and a recording layer containing Cr.

(57) A magneto-optical recording medium comprises a first magnetic layer consisting of an $R_1$-Fe-Co-Cr amorphous alloy when $R_1$ is at least one element of Tb and Dy, and a second magnetic layer having a higher curie temperature than the first magnetic layer and a low coercive force at room temperature and exchangecoupled to the first magnetic layers, the second magnetic layer consisting of an $R_2$-Fe-Co amorphous alloy when $R_2$ is at least one element of Tb, Dy and Gd. The composition ratio of Co in the first magnetic layer is smaller than the composition ratio of Co in the second magnetic layer.

EP 0 364 212 A1

**Magneto-Optical Recording Medium Having a Reading-out Layer and a Recording Layer Containing Cr**

## BACKGROUND OF THE INVENTION

### Field of the Invention

This invention relates to a magneto-optical recording medium suitable for use in an information memory system such as the outside memory of a computer or an image file.

### Related Background Art

A magneto-optical recording medium using a rare earth-iron group amorphous alloy thin film is not sufficient in its durability, and suffers from problems such as selective oxidation of rare earth elements, surface oxidation of magnetic film and erosion, and various improving methods have been proposed in this respect. One of them is the addition of elements intending to improve the durability of the magnetic film itself (for example, the Journal of Japan Applied Magnetic Association 9 (1985) 93). The elements added include Cr, Al, Ti, Ni, Co, Pt, etc.

Also, the magneto-optical recording medium using a rare earth-iron group amorphous alloy thin film is not sufficient in its reading-out characteristic and various propositions have been made as to a method of improving this. One of them is, as proposed, for example, in U.S. Patent No. 4,799,114, an exchange-coupled two-layer magnetic film comprising a film having a good recording characteristic (a recording layer) and a film having a good reading-out characteristic (a reading-out layer). In the conventional exchange-coupled two-layer magnetic film, Tb-Fe, Dy-Fe, Tb-Fe-Co or Dy-Fe-Co has been used for the recording layer, and Gd-Fe, Gd-Co, Gd-Fe-Co or Tb-Fe-Co has been used for the reading-out layer.

Considering the addition of an element for the improvement indurability, Cr is best if only its effect is taken into account, but this has posed the problem that the curie temperature falls and the magneto-optical effect is reduced. If the curie temperature falls, the recording sensitivity will become higher, but the stability of recording information for a temperature rise will become smaller and therefore, unnecessary fall of the curie temperature is not preferable. Also, a reduction in the magneto-optical effect reduces the reading-out characteristic and therefore, this is neither preferable.

Co is another element for improving the durability, but is inferior to Cr in the effect of improving the durability. Also, the addition of Co increases the magneto-optical effect, but this involves the rise of the curie temperature with a result that the recording sensitivity is reduced.

Considering the addition of the two elements, Cr and Co, the reduction in the curie temperature caused by the addition of Cr can be prevented by the addition of Co, but even if an attempt is made so that the curie temperature may not change, the magneto-optical effect will still be reduced.

Accordingly, to suppress the reduction in the magneto-optical effect to such a degree that there is no problem in practice, Cr could not be much added and thus, an improvement in the durability could not be sufficiently achieved.

Now, with regard to the rare earth-iron group amorphous alloy thin film, it is known that the more content of Co as an iron group element results in the greater improvement in the durability (particularly the prevention of pit erosion). In the exchange-coupled two-layer magnetic film, the reading-out layer thereof may have any high curie temperature and therefore, use can be made of Tb-Fe-Co containing a great deal of Co, and an improvement in the reading-out characteristic as well as an improvement in the durability can be accomplished to a certain degree. However, Tb-Fe or Dy-Fe is used in the recording layer, and the addition of Co thereto, even in a small amount, has led to the problem that the curie temperature rises considerably and the recording sensitivity becomes worse.

## SUMMARY OF THE INVENTION

It is the object of the present invention to solve the above-noted problems peculiar to the prior art and to provide a magneto-optical recording medium having good information recording and reading-out characteristics and excellent in durability.

The above object of the present invention is achieved by a magneto-optical recording medium comprising a first magnetic layer consisting of an $R_1$-Fe-Co-Cr amorphous alloy when $R_1$ is at least one element of Tb and Dy, and a second magnetic layer having a higher curie temperature than said first magnetic layer and a low coercive force at room temperature and exchange-coupled to said first magnetic layer, said second magnetic layer consisting of an $R_2$-Fe-Co amorphous alloy when $R_2$ is at least one element of Tb, Dy and Gd, wherein the composition ratio of Co in said first magnetic layer being smaller than the composition ratio of Co in said second magnetic layer.

## BRIEF DESCRIPTION OF THE DRAWING

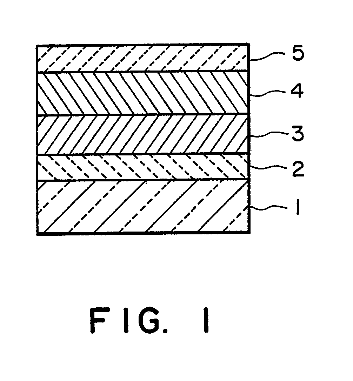

Figure 1 is a schematic cross-sectional view showing an embodiment of the magneto-optical recording medium of the present invention.

## DESCRIPTION OF THE PREFERRED EMBODIMENTS

Referring to Figure 1 which is a schematic cross-sectional view showing the construction of an embodiment of the magneto-optical recording medium of the present invention, the reference numeral 1 designates a transparent substrate formed of glass or plastic. On this substrate 1, there is provided an underlining layer 2 for providing the interference effect and the corrosion preventing effect formed of a dielectric material such as $Si_3N_4$. Further, on this underlining layer 2, there are formed a second magnetic layer 3 which is a reading-out layer, and a first magnetic layer 4 which is a recording layer having a higher coercive force at room temperature and a lower curie temperature than said second magnetic layer 3. These magnetic layers are continuously made as films without breaking vacuum during the making of the medium, and are exchange-coupled to each other. Also, on the first magnetic layer 4, there is formed a protective layer 5 formed of a dielectric material such as $Si_3N_4$ to prevent the corrosion of these magnetic layers.

In the exchange-coupled two-layer film as described above, the recording layer need be suitably low in its curie temperature, but has nothing to do with reading-out and therefore, however low its magneto-optical effect may be. On the other hand, the reading-out layer need be great in its magneto-optical effect, but has nothing to do with recording and therefore, however high its curie temperature may be.

In the present invention, paying attention to this respect, a small amount of Co and a great amount of Cr are added in the recording layer, whereby a great effect of durability is obtained in such a manner that its magneto-optical effect is reduced but its curie temperature is not changed. This reduction in the magneto-optical effect does not affect the reading-out characteristic.

On the other hand, in the reading-out layer, Co alone is added in a great amount, whereby a great effect of durability is obtained in such a manner that its curie temperature becomes higher but its magneto-optical effect is not reduced. This rise of the curie temperature does not affect the recording sensitivity.

The material of the recording layer may preferably be R-Fe-Co-Cr (R being Tb and/or Dy). The composition of the material, when expressed as

$\{(Tb_{1-x}Dy_x)_z(Fe_{1-y}Co_y)_{1-z}\}$ $1-wCr_w$

in terms of the element ratio, may preferably be in the range of $0 < x \leq 1$, $0 < y \leq 0.5$, $0.1 \leq z \leq 0.4$ and $0.01 < w \leq 0.3$. The film thickness may preferably be of the order of 100 - 2000 Å. Among the curie temperature Tc of this recording layer, the element number ratio x of Dy, the element number ratio y of Co and the element number ratio w of Cr, there has been substantially obtained the relation that

$Tc = 130(1-x) + 70x + (400-600)y - 500w(°C)$.

Accordingly, the values of x, y and w can be suitably chosen so that the curie temperature of the recording layer may be a desired value.

In a magneto-optical memory, information is recorded by the utilization of the heat action of laser light and therefore, the lower is the curie temperature of its magnetic film, the higher becomes the recording sensitivity. What determines the recording sensitivity in an exchange-coupled two-layer magnetic film is the curie temperature of the recording layer thereof and therefore, if the curie temperature of the recording layer is lowered, the recording sensitivity becomes higher. However, taking the stability of recording information into consideration, the curie temperature of the recording layer cannot be lowered so much. When the stability of the recording information is taken into consideration, the stability not only at room temperature but also at a tempreature somewhat higher than room temperature need also be taken into consideration. This is because various heat generation sources are present in the drive device of a magneto-optical memory and therefore the interior thereof sometimes rises to a temperature of the order of 50 - 60 °C and further in the reading-out of information, a weak laser light of such a degree that will not record information is applied to the medium to thereby accomplish reading-out, but nevertheless a certain degree of temperature rise of the medium is unavoidable, and also because for the convenience of the operation of the drive device, there is a case where reading-out must be effected with a bias magnetic field for recording and erasing being applied to the medium. Accordingly, even when in the drive device of the order of 50 - 60 °C, the temperature of the medium further rises due to the reading-out light under the application of a bias magnetic field, it is necessary that the recording information be stable. Taking all these into consideration, the curie temperature of the recording layer may desirably be of the order of 150 - 200 °C.

As a material suitable for use as the readingout layer, mention may be made of $R_2$-Fe-Co ($R_2$ being at least one element of Gd, Tb and Dy). However, as the composition of this material,

$R_{2z}(Fe_{1-y}Co_y)_{1-z}$

and particularly, $(Tb_{1-x}Dy_x)_z(Fe_{1-y}Co_y)_{1-z}$ is preferable in terms of the element number ratio. Here, a material which is in the range of $0 \leq x \leq 1$, $0.1 \leq y \leq 1$ and $0.1 \leq z \leq 0.4$ and in which the composition ratio of Co in the recording layer is smaller than the composition ratio of Co in the reading-out layer is preferable. The film thickness may preferably be of the order of 100 - 2000 Å.

The magneto-optical effect of the rare earth-iron group amorphous alloy thin film in the wavelength of a visible range depends chiefly on the magneto-optical effect of the iron group element, and the iron group magnetic moment in the vicinity of room temperature becomes greatest for a composition of the order of Fe.70 Co.30, and if Co is less than that, the iron group magnetic moment decreases considerably, and if Co is more than that, the iron group magnetic moment decreases somewhat. Accordingly, the composition of Co may preferably be about 30 atom.% or more for Fe.

Embodiment 1

By the use of the ordinary magnetron sputtering method, a conventional disk-like magneto-optical recording medium and the disk-like magneto-optical recording medium of the present invention having a diameter of 130 mm were made, and experiment was carried out about the recording sensitivity, the reading-out characteristic and the durability thereof. The Ar gas pressure was about 0.15 Pa. As a protective film, SiN was provided to 700 Å on the both sides of each recording medium. In the conventional medium, the reading-out layer was Gd.22 (Fe.70Co.30).78 and had a film thickness of 200 Å, and the recording layer was Tb.22 (Fe.92Co.08).78 and had a film thickness of 600 Å, and in the present invention, the reading-out layer was Tb.18 (Fe.70Co.30).82 and had a film thickness of 200 Å, and the recording layer was (Tb.22 (Fe.85Co.15).78).93 Cr.07 and had a film thickness of 600 Å. Polycarbonate was used for the substrate. The curie temperature of the recording layer was about 170 ° C in both of the conventional medium and the medium of the present invention.

For the number of revolutions 1500 rpm and a radius of 35 mm, under a bias magnetic field 200 Oe, laser power of 4.9 mW was necessary for recording on the conventional medium and the medium of the present invention could accomplish recording at laser power of 4.7 mW and no difference was found in the recording characteristic thereof. Also, the reading-out CN ratio at 3.08 MHz was 49dB in the conventional medium, and 48dB in the medium of the present invention, and no difference was found in the reading-out characteristic.

Also, in the test of durability using NaCl water solution of 1 N, considerable pin-holes were observed in the conventional medium after it was immersed in the solution for 15 minutes, while no pin-hole was observed in the medium of the present invention.

Embodiment 2

Experiment was carried out under the same conditions as Embodiment 1 with the exception that in the conventional medium, the recording layer was Dy.21 (Fe.82Co.18).79 and had a film thickness of 600 Å and in the medium of the present invention, the recording layer was (Dy.21-(Fe.75Co.25).79).93 Cr.07 and had a film thickness of 600 Å and the reading-out layer was Dy.18 (Fe.70Co.30).82, and had a film thickness of 200 Å. The curie temperature of the recording layer was about 170 ° C in both of the conventional medium and the medium of the present invention.

For the number of revolutions 1500 rpm and a radius of 35 mm, under a bias magnetic field 200 Oe, laser power of 4.8 mW was necessary for recording on the conventional medium, and the medium of the present invention could accomplish recording at laser power of 4.9 mW, and no difference was found in the recording characteristic. Also, the reading-out CN ratio at 3.08 MHz was 48dB in the conventional medium, and also 48dB in the medium of the present invention, and no difference was found in the reading-out characteristic.

Also, in the test of durability using NaCl water solution of 1 N, considerable pin-holes were observed in the conventional medium after it was immersed in the solution for 15 minutes, while no pin-hole was observed in the medium of the present invention.

Embodiment 3

Experiment was carried out under the same conditions as the above-described embodiments with the exception that in the conventional medium, the recording layer was (Tb.50Dy.50).22 (Fe.87Co.13).78 and had a film thickness of 600 A and in the medium of the present invention, the recording layer was ((Tb.50Dy).22 (Fe.80Co.20)-.78).93 Cr.07 and had a film thickness of 600 Å and the reading-out layer was (Tb.60Dy.40).18 (Fe.70Co.30).82 and had a film thickness of 200 Å. The curie temperature of the recording layer was about 170 ° C in both of the conventional medium and the medium of the present invention.

For the number of revolutions 1500 rpm and a radius of 35 mm, under a bias magnetic field 200 Oe, laser power of 4.8 mW was necessary for recording on the conventional medium, and the medium of the present invention could accomplish recording at laser power of 4.9 mW, and no difference was found in the recording characteristic. Also, the reading-out CN ratio at 3.08 MHz was 47dB in the conventional medium, and 48dB in the medium of the present invention, and no difference was found in the reading-out characteristic.

Also, in the test of durability using NaCl water solution of 1 N, considerable pin-holes were observed in the conventional medium after it was immersed in the solution for 15 minutes, while no pin-hole was observed in the medium of the present invention.

In the above-described embodiments, R-Fe-Co (R being Tb and/or Dy) is used as the reading-out layer, but likewise Gd-R-Fe-Co (R being Tb and/or Dy) can be suitably used. The composition, when expressed as

$(Gd_{1-x}R_x)_z (Fe_{1-y}Co_y)_{1-z}$,

is $0.1 \leq x \leq 0.9$, $0.1 < y < 1$ and $0.1 \leq z \leq 0.4$. Examples of this will be shown below.

Embodiment 4

By the use of the ordinary magnetron sputtering method, a conventional disk-like magneto-optical recording medium and the disk-like magneto-optical recording medium of the present invention having a diameter of 130 mm were made, and experiment was carried out about the recording sensitivity, the reading-out characteristic and the durability thereof. The Ar gas pressure was about 0.15 Pa. As a protective film, SiN was provided to 700 Å on the both sides of each recording medium. In the conventional medium, the reading-out layer was Gd.22 (Fe.70Co.30).78 and had a film thickness of 300 Å, and the recording layer was Tb.22 (Fe.92Co.08).78 and had a film thickness of 500 Å, and in the medium of the present invention, the reading-out layer was (Gd.50Tb.50).20 (Fe.70Co.30).80 and had a film thickness of 300 Å, and the recording layer was (Tb.22(Fe.85Co.15).78).93 Cr.07 and had a film thickness of 500 Å. Polycarbonate was used for the substrate. The curie temperature of the recording layer was about 170 °C in both of the conventional medium and the medium of the present invention.

For the number of revolutions 1500 rpm and a radius of 35 mm, under a bias magnetic field 200 Oe, laser power of 4.7 mW was necessary for recording on the conventional medium, and the medium of the present invention could accomplish recording at laser power of 4.9 mW and no difference was found in the recording characteristic.

Also, the reading-out CN ratio at 3.08 MHz was 49dB in the conventional medium, and 50dB in the medium of the present invention, and no difference was found in the reading-out characteristic.

Also, in the test of durability using NaCl water solution of 1 N, considerable pin-holes were observed in the conventional medium after it was immersed in the solution for 15 minutes, while no pin-hole was observed in the medium of the present invention.

Further, in a magnetic field of 600 Oe, the maximum reproducing power for which the recording information is not deteriorated was as low as about 1.4 mW in the conventional medium, but was as high as about 1.9 mW in the medium of the present invention.

Embodiment 5

Experiment was carried out under the same conditions as the above Embodiment with the exception that in the conventional medium, the recording layer was Dy.21 (Fe.82Co.18).79 and had a film thickness of 500 Å and in the medium of the present invention, the recording layer was (Dy.21-(Fe.75Co.25).79).93 Cr.07 and had a film thickness of 500 Å and the reading-out layer was (Gd.50Dy.50).20 (Fe.70Co.30).80 and had a film thickness of 300 Å. The curie temperature of the recording layer was about 170 °C in both of the conventional medium and the medium of the present invention.

For the number of revolutions 1500 rpm and a radius of 35 mm, under a bias magnetic field 200 Oe, laser power of 4.6 mW was necessary for recording on the conventional medium, and the medium of the present invention could accomplish recording at laser power of 4.6 mW and no difference was found in the recording characteristic. Also, the reading-out CN ratio at 3.08 MHz was 48dB in the conventional medium, and 49dB in the medium of the present invention, and no difference was found in the reading-out characteristic.

Also, in the test of durability using NaCl water solution of 1 N, considerable pin-holes were observed in the conventional medium after it was immersed in the solution for 15 minutes, while no pin-hole was observed in the medium of the present invention.

Further, in a magnetic field of 600 Oe, the maximum reproducing power for which the recording information is not deteriorated was as low as about 1.3 mW in the conventional medium, but was as high as 1.9 mW in the medium of the present invention.

## Embodiment 6

Experiment was carried out under the same condition as the above-described embodiments with the exception that in the conventional medium, the recording layer was (Tb.50Dy.50).22 (Fe.87Co.13).78 and had a film thickness of 500 Å and in the medium of the present invention, the recording layer was ((Tb.50Dy.50).19(Fe.80Co.20).81).93 Cr.07 and had a film thickness of 500 Å and the reading-out layer was (Gd.34Tb.33Dy.33).22 (Fe.70Co.30).78 and had a film thickness of 300 Å. The curie temperature of the recording layer was about 170 °C in both of the conventional medium and the medium of the present invention.

For the number of revolutions 1500 rpm and a radius of 35 mm, under a bias magnetic field 200 Oe, laser power of 4.9 mW was necessary for recording on the conventional medium, and the medium of the present invention could accomplish recording at laser power of 5.1 mW and no difference was found in the recording characteristic. Also, the reading-out CN ratio at 3.08 MHz was 48dB in the conventional medium, and 59dB in the medium of the present invention, and no difference was found in the reading-out characteristic.

Also, in the test of durability using NaCl water solution of 1 N, considerable pin holes were observed in the conventional medium after it was immersed in the solution for 15 minutes, while no pin-hole was observed in the medium of the present invention.

Further, in a magnetic field of 600 Oe, the maximum reproducing power for which the recording information is not deteriorated was as low as about 1.4 mW in the conventional medium, but was as high as 2.0 mW in the medium of the present invention.

The present invention permits various applications besides the above-described embodiments. The present invention covers all such applications without departing from the scope of the invention as defined in the appended claims.

## Claims

1. A magneto-optical recording medium comprising:
a first magnetic layer consisting of an $R_1$-Fe-Co-Cr amorphous alloy when $R_1$ is at least one element of Tb and Dy; and
a second magnetic layer having a higher curie temperature than said first magnetic layer and a low coercive force at room temperature and exchange-coupled to said first magnetic layer, said second magnetic layer consisting of an $R_2$-Fe-Co amorphous alloy when $R_2$ is at least one element of Tb, Dy and Gd;
wherein the composition ratio of Co in said first magnetic layer being smaller than the composition ratio of Co in said second magnetic layer.

2. A magneto-optical recording medium according to Claim 1, wherein said first magnetic layer consists of an alloy having the following composition:
$\{ (Tb_{1-x}Dy_x)_z(Fe_{1-y}Co_y)_{1-z}\}_{1-w}Cr_w$
where $0 \leq x \leq 1$, $0 < y \leq 0.5$, $0.1 < z \leq 0.4$ and $0.01 < w < 0.3$.

3. A magneto-optical recording medium according to Claim 1, wherein said second magnetic layer consists of an alloy having the following composition:
$(Tb_{1-x}Dy_x)_z(Fe_{1-y}Co_y)_{1-z}$,
where $0 \leq x \leq 1$, $0.1 < y < 1$ and $0.1 \leq z \leq 0.4$.

4. A magneto-optical recording medium according to Claim 1, wherein said second magnetic layer consists of an alloy having the following composition:
$(Gd_{1-x}R_x)_z(Fe_{1-y}Co_y)_{1-z}$,
where R is at least one element of Tb and Dy, $0.1 \leq x < 0.9$, $0.1 < y < 1$ and $0.1 \leq z \leq 0.4$.

5. A magneto-optical recording medium according to Claim 1 wherein the thickness of said first magnetic layer is within the range of 100 - 2000 Å.

6. A magneto-optical recording medium according to Claim 1, wherein the curie temperature of said first magnetic layer is within the range of 150 - 200 °C.

7. A magneto-optical recording medium according to Claim 1, wherein the thickness of said second magnetic layer is within the range of 100 - 2000 Å.

8. A magneto-optical recording medium according to Claim 1, further comprising a substrate on which said first and second magnetic layers are formed.

9. A magneto-optical recording medium according to Claim 8, further comprising an underlining layer formed between said substrate and said magnetic layers.

10. A magneto-optical recording medium according to Claim 9, wherein said underlining layer consists of silicon nitride.

11. A magneto-optical recording medium according to Claim 1, further comprising a protective layer formed on said magnetic layers.

12. A magneto-optical recording medium according to Claim 11, wherein said protective layer consists of silicon nitride.

13. A magneto-optical recording medium comprising first and second magnetic layers serving as recording and readout layers respectively, wherein said layers differ in cobalt content.

14. A magneto-optical recording medium according to Claim 13, wherein the second layer contains substantially no chromium.

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | PATENT ABSTRACTS OF JAPAN, unexamined applications, P field, vol. 12, no. 488, December 20, 1988 THE PATENT OFFICE JAPANESE GOVERNMENT page 84 P 803 * Kokai-Nr. 63-200 343 (SONY CORP.) * | 1,8,9, 11 | G 11 B 11/10 G 11 B 11/12 G 11 B 11/14 G 11 B 11/18 G 11 B 13/04 G 11 B 7/24 G 11 B 7/26 |
| P,A | | 2,3,4, 5,7 | |
| X | & JP-A-63-200 343 (SONY CORP.) * Fig. 8 * | 1,8,9, 11 | |
| A | * Totality * | 2,3,4, 5,7 | |
| A | EP - A2 - 0 168 046 (HITACHI LTD) * Abstract * | 1,2,3, 4,5,7 | |
| A | EP - A2 - 0 045 183 (ASAHI KASEI KOGYO K.K.) * Claims 9,10; fig. 1 * | 1,2,3, 4,8 | TECHNICAL FIELDS SEARCHED (Int. Cl.4) G 11 B 7/00 G 11 B 11/00 G 11 B 13/00 H 01 F 10/00 B 41 M 5/00 G 11 B 5/00 |

The present search report has been drawn up for all claims

| Place of search | Date of completion of the search | Examiner |
|---|---|---|
| VIENNA | 29-01-1990 | BERGER |